# EUROPEAN PATENT APPLICATION

(11) **EP 3 904 313 A1**
(43) Date of publication of application: **03.11.2021**
(21) Application number: 21170187.5
(22) Date of filing: 23.04.2021
(51) Int. Cl.: C04B 41/00, C04B 41/52, C04B 41/87, C04B 41/89, B28B 11/08, F01D 5/28, C04B 111/00

(54) **ENVIRONMENTAL BARRIER COATING AND METHOD OF APPLYING AN ENVIRONMENTAL BARRIER COATING**

(30) Priority: 27.04.2020 US 202016859180
(71) Applicant: Raytheon Technologies Corporation, Farmington, CT 06032 (US)
(72) Inventor: LILES, Howard J., Newington, 06111 (US); BEALS, James T., West Hartford, 06107 (US)
(74) Representative: Dehns

(57) **Abstract**

A method of fabricating a barrier layer on a substrate includes mixing gettering particles, diffusive particles, and matrix material in a carrier fluid to form a slurry; applying a layer of the slurry to the substrate; adjusting the surface of the layer of the slurry; and sintering the layer of the slurry to form a barrier layer. An article is also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

This disclosure relates to composite articles, such as those used in gas turbine engines. Components, such as gas turbine engine components, may be subjected to high temperatures, corrosive and oxidative conditions, and elevated stress levels. In order to improve the thermal and/or oxidative stability, the component may include a protective barrier coating.

### SUMMARY

A method of fabricating a barrier layer on a substrate (e.g. a ceramic matrix composite substrate as comprised in the article disclosed herein) according to an exemplary embodiment of this disclosure, among other possible things includes mixing gettering particles, diffusive particles, and matrix material in a carrier fluid to form a slurry; applying a layer of the slurry to the substrate; adjusting the surface of the layer of the slurry; and sintering the layer of the slurry to form a barrier layer.

In a further example of the foregoing, the method includes partially curing the layer of the slurry prior to the adjusting, e.g. the smoothing, step.

In a further example of any of the foregoing, the adjusting is achieved by applying force to the layer of the slurry.

In a further example of any of the foregoing, the force is applied by a mold.

In a further example of any of the foregoing, the adjusting includes placing the substrate with the layer of the slurry into a first tool of a mold after the applying step and applying force to the layer of the slurry by pressing a second tool onto the layer of the slurry.

In a further example of any of the foregoing, the method includes placing the substrate into a mold. The adjusting and applying are performed simultaneously by injecting the slurry into the mold.

In a further example of any of the foregoing, the layer of the slurry is heated during the adjusting.

In a further example of any of the foregoing, the method includes partially curing the layer of the slurry prior to the adjusting step.

In a further example of any of the foregoing, the sintering is performed in the mold.

In a further example of any of the foregoing, the adjusting includes smoothing the surface of the layer of the slurry.

In a further example of any of the foregoing, the smoothing reduces the macro-level surface roughness of the layer of the slurry by at least 50%.

In a further example of any of the foregoing, the adjusting includes forming a texture in the surface of the layer of the slurry.

In a further example of any of the foregoing, the method includes partially curing the layer of the slurry prior to the adjusting step. The adjusting includes smoothing by tumbling the substrate and layer of partially cured slurry in an abrasive media.

In a further example of any of the foregoing, the gettering particles are silicon oxycarbide particles, the diffusive particles are barium-magnesium alumino-silicate particles, and the matrix material is colloidal silica.

In a further example of any of the foregoing, the method includes creating micro-level surface roughness on the barrier layer after the sintering.

In a further example of any of the foregoing, the method includes applying a ceramic-based topcoat to the barrier layer after creating micro-level surface roughness on the barrier layer.

An article according to an exemplary embodiment of this disclosure, among other possible things includes a ceramic matrix composite substrate; a barrier layer (e.g. a barrier layer formed by the method disclosed herein) on the ceramic matrix composite substrate, the barrier layer including diffusive particles and gettering particles in a matrix, the barrier layer having a surface texture; and a ceramic-based topcoat including an oxide-based material on the barrier layer.

In a further example of the foregoing, the gettering particles are silicon oxycarbide particles, the diffusive particles are barium-magnesium alumino-silicate particles, and the matrix material is silicon dioxide.

In a further example of any of the foregoing, the barrier layer includes by volume, about 1-30% of the barium-magnesium alumino-silicate particles, about 5-40% of the silicon dioxide and a balance of the silicon oxycarbide particles.

In a further example of any of the foregoing, the substrate is an airfoil for a gas turbine engine.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 illustrates an example article having a barrier layer of a composite material that includes barium-magnesium alumino-silicate particles.
Figure 3 illustrates a network of silicon oxycarbide.
Figure 4 illustrates another example article having a barrier layer of a composite material that includes barium-magnesium alumino-silicate particles.
Figure 5 illustrates another example article having a barrier layer of a composite material that includes barium-magnesium alumino-silicate particles.
Figure 6 illustrates a method of fabricating the barrier layer of composite material of Figures 2-5.
Figures 7A-E show the barrier layer during fabrication according to the method of Figure 6.

### DETAILED DESCRIPTION

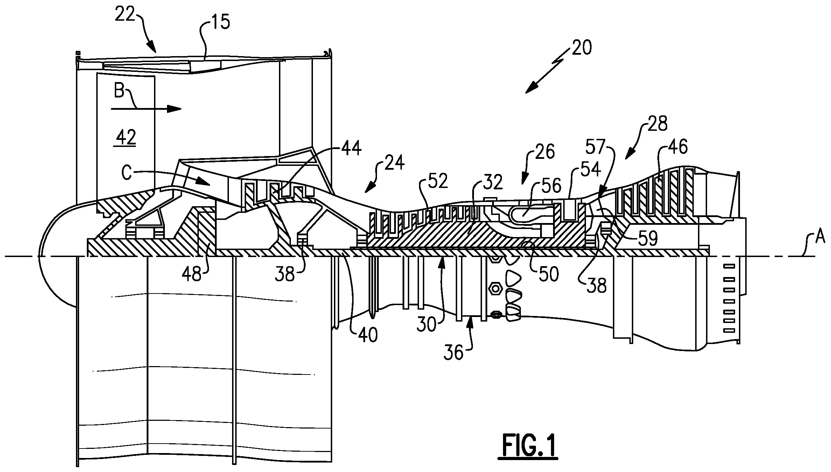

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans. A significant amount of thrust is provided by the bypass flow B due to the high bypass ratio. The fan section 22 of the engine 20 is designed for a particular flight condition - typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]0.5. The "Low corrected fan tip speed" as disclosed herein according to one non-limiting embodiment is less than about 1150 ft / second (350.5 meters/second).

The example gas turbine engine includes the fan section 22 that comprises in one non-limiting embodiment less than about 26 fan blades 42. In another non-limiting embodiment, the fan section 22 includes less than about 20 fan blades 42. Moreover, in one disclosed embodiment the low pressure turbine 46 includes no more than about 6 turbine rotors. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors in the low pressure turbine 46 and the number of blades 42 in the fan section 22 disclose an example gas turbine engine 20 with increased power transfer efficiency.

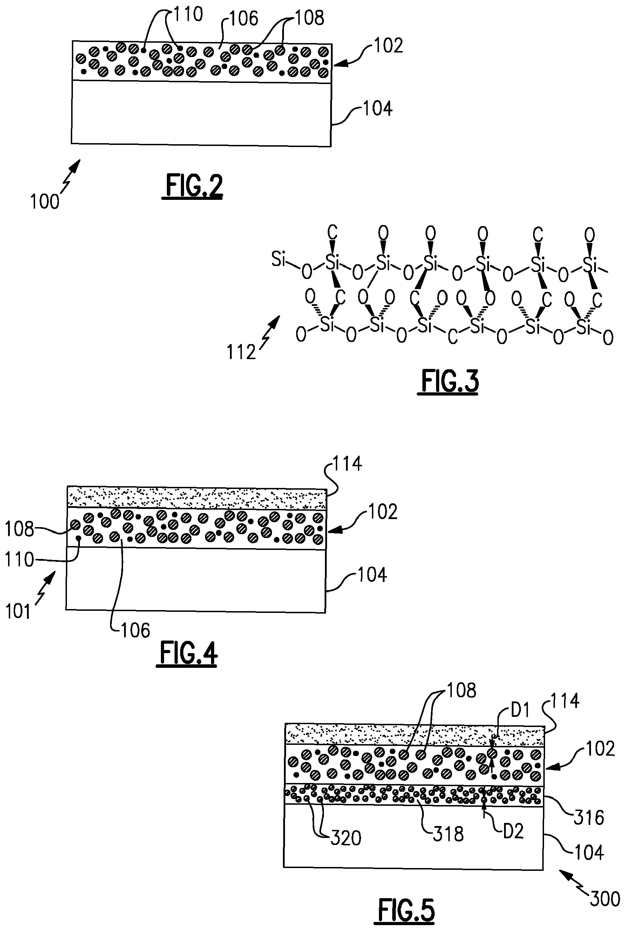

Figure 2 schematically illustrates a representative portion of an example article 100 for the gas turbine engine 20 that includes a composite material 102 that is used as a barrier layer. The article 100 can be, for example, an airfoil in the compressor section 24 or turbine section 28, a combustor liner panel in the combustor section 26, a blade outer air seal, or other component that would benefit from the examples herein. In this example, the composite material 102 is used as an environmental barrier layer to protect an underlying substrate 104 from environmental conditions, as well as thermal conditions. As will be appreciated, the composite material 102 can be used as a stand-alone barrier layer, as an outermost/top coat with additional underlying layers, or in combination with other coating under- or over-layers, such as, but not limited to, ceramic-based topcoats.

The composite material 102 includes a matrix of silicon dioxide (SiO₂) 106, a dispersion of "gettering" particles, and a dispersion of diffusive particles. In one example, the gettering particles are silicon oxycarbide particles (SiOC) 108 and the diffusive particles are barium-magnesium alumino-silicate particles 110 ("BMAS particles 110"), though other examples are contemplated. The gettering particles 108 form a network within the matrix. For instance, silicon oxycarbide particles 108 have silicon, oxygen, and carbon in a covalently bonded network, as shown in the example network 112 in Figure 3.

The network 112 is amorphous and thus does not have long range crystalline structure. The illustrated network 112 is merely one example in which at least a portion of the silicon atoms are bonded to both O atoms and C atoms. As can be appreciated, the bonding of the network 112 will vary depending upon the atomic ratios of the Si, C, and O. In one example, the silicon oxycarbide particles 108 have a composition SiOₓM_{z}C_{y}, where M is at least one metal, x <2, y >0, z <1, and x and z are non-zero. The metal can include aluminum, boron, transition metals, refractory metals, rare earth metals, alkaline earth metals or combinations thereof.

In one example, the composite material 102 includes, by volume, 1-30% of the diffusive/BMAS particles 110. In a more particular example, the composite material 102 includes, by volume, 1 - 10% of diffusive/BMAS particles. In a further example, the composite material 102 includes, by volume, 30-94% of the gettering/silicon oxycarbide particles 108. In a particular example, the composite material includes, by volume, 60-90% of the gettering/silicon oxycarbide particles 108. In one further example, the composite material 102 includes, by volume, 5-40% of the matrix 26 of silicon dioxide. In a further example, the composite material 102 includes, by volume, 1-30% of the diffusive/BMAS particles 110, 5-40% of the matrix 106 of silicon dioxide, and a balance of the gettering/silicon oxycarbide particles 108.

The barrier layer protects the underlying substrate 104 from oxygen and moisture. For example, the substrate 104 can be a ceramic-based substrate, such as a silicon-containing ceramic material. One example is silicon carbide. The silicon oxycarbide particles 108 and the BMAS particles 110 of the barrier layer function as an oxygen and moisture diffusion barrier to limit the exposure of the underlying substrate 104 to oxygen and/or moisture from the surrounding environment. Without being bound by any particular theory, the BMAS particles 110 enhance oxidation and moisture protection by diffusing to the outer surface of the barrier layer opposite of the substrate 104 and forming a sealing layer that seals the underlying substrate 104 from oxygen/moisture exposure. Additionally, the cationic metal species of the BMAS particles 110 (barium, magnesium, and aluminum) can diffuse into the silicon oxycarbide particles 108 to enhance oxidation stability of the silicon oxycarbide material. Further, the diffusion behavior of the BMAS particles 110 may operate to seal any microcracks that could form in the barrier layer. Sealing the micro-cracks could prevent oxygen from infiltrating the barrier layer, which further enhances the oxidation resistance of the barrier layer. The gettering particles, such as the silicon oxycarbide particles 108, can react with oxidant particles, such as oxygen or water, that could diffuse into the barrier layer. In this way, the gettering particles could reduce the likelihood of those oxidant particles reaching and oxidizing the substrate 104.

In one example, an average maximum dimension of the BMAS particles 110 is less than the average maximum dimension of the silicon oxycarbide particles 108.

Figure 4 shows another example article 101 that includes the composite material 102 as a barrier layer arranged on the substrate 104. In this example, the article 101 additionally includes a ceramic-based top coat 114 interfaced with the barrier layer. As an example, the ceramic-based top coat 114 can include one or more layers of an oxide-based material. The oxide-based material can be, for instance, hafnium-based oxides (such as hafnia, hafnium silicate), yttrium-based oxides (such as yttrium silicate, yttria stabilized zirconia), or gadolinia stabilized zirconia, or combinations thereof, but is not limited to such oxides.

Figure 5 illustrates another example article 300 that is somewhat similar to the article 101 shown in Figure 4 but includes a distinct intermediate layer 316 interposed between the barrier layer of the composite material 102 and the substrate 104. In this example, the distinct intermediate layer 316 includes an intermediate layer matrix 318 of silicon dioxide and a dispersion of intermediate layer silicon oxycarbide particles 320 in the intermediate layer matrix 318. The intermediate layer silicon oxycarbide particles 320 are similar to the silicon oxycarbide particles 108 in composition but, in this example, the intermediate layer silicon oxycarbide particles 320 have an average maximum dimension (D2) that is less than the average maximum dimension (D1) of the silicon oxycarbide particles 108. The relatively small intermediate layer silicon oxycarbide particles 320 provide a relatively low roughness for enhanced bonding with the underlying substrate 104. The larger silicon oxycarbide particles 108 of the barrier layer provide enhanced blocking of oxygen/moisture diffusion. Thus, in combination, the barrier layer and intermediate layer 316 provide good adhesion and good oxidation/moisture resistance. In one further example, D1 is 44-75 micrometers and D2 is 1-44 micrometers.

In one example, the intermediate layer 316 can include, by volume, 5-40% of the intermediate layer matrix 318 of silicon dioxide and a balance of the intermediate layer silicon oxycarbide particles 320. In further examples, a portion of the BMAS particles 110 from the barrier layer can penetrate or diffuse into the intermediate layer 316, during processing, during operation at high temperatures, or both. In a further example, a seal coat layer of SiO₂, with or without BMAS particles, can be provided between the barrier layer and the intermediate layer 316 to provide adhesion and additional sealing. In further examples of any of the compositions disclosed herein, said compositions can include only the listed constituents. Additionally, in any of the examples disclosed herein, the matrix 106 and 318 can be continuous. The two-layer structure is expected to demonstrate good oxidation protection at 2000-2700°F for 500 hours or longer as well as good adhesion with the ceramic-based top coat 114.

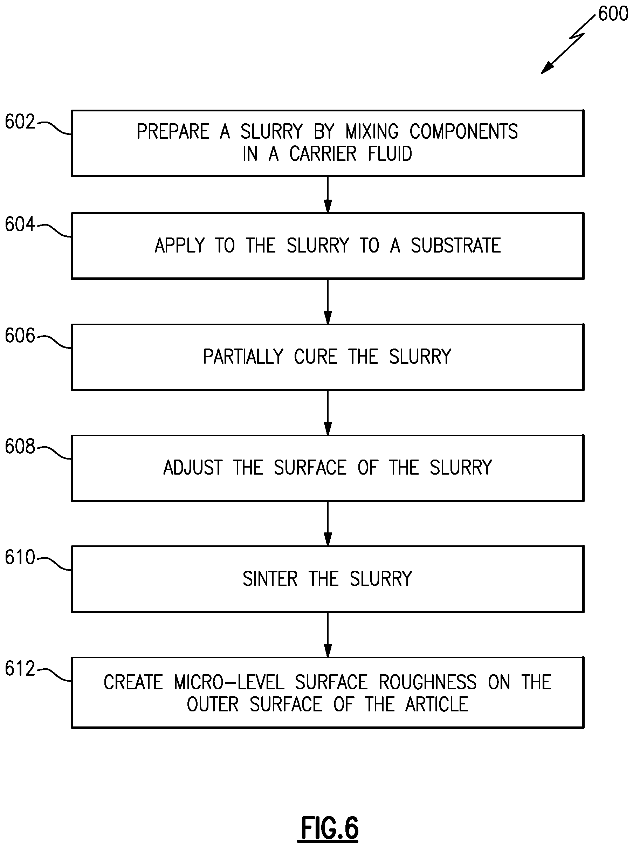

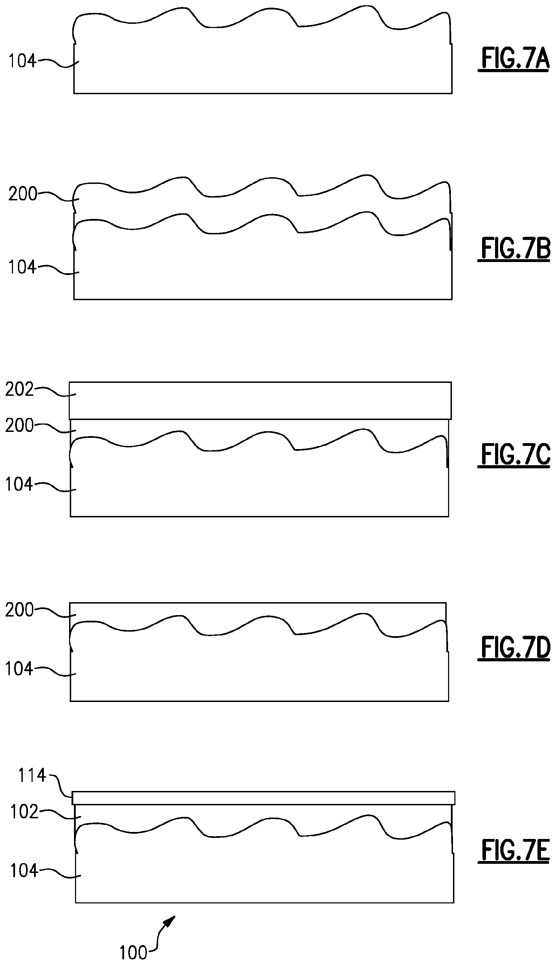

The barrier layer and/or intermediate layer 316 can be fabricated according to the following method 600, shown in Figure 6. Figures 7A-E show fabrication of the barrier layer (e.g. composite material 102) onto the substrate 104 according to the method. Though Figures 7A-E do not show an intermediate layer 316, it should be understood that an intermediate layer 316 could also be used in addition to the barrier layer, and in some examples could also be fabricated according to the method 600.

In step 602, a slurry is prepared by mixing components of the barrier layer/intermediate layer 316 as discussed above. For example, the slurry can include gettering particles 108, diffusive particles 110, and matrix material such as powder of silicon dioxide or colloidal silica (Ludox) in a carrier fluid. In some examples, the slurry also includes an additive that decreases the curing time of the slurry as would be known in the art. Some example additives are substances commonly used as paint retarders like propylene glycol. The carrier fluid can be water, meaning that in this example, the slurry is aqueous. However, other carrier fluids could be used as would be known in the art. The slurries can be mixed by agitation or ball milling. The slurry can have a viscosity between about 1 and 1000 cps. In a further example, the viscosity of the slurry is between about 250 and 750 cps.

In a particular example, a slurry of SiOC/SiO2 75/25 vol% was prepared by mixing appropriate amounts of SiOC and Ludox colloidal silica. A small amount of water was added to adjust the viscosity. The slurry was further mixed by ball milling for at least 15 hours. A slurry of SiOC/BMAS/SiO₂ 80/5/15 vol% was prepared likewise by mixing appropriate amounts of SiOC, BMAS and Ludox colloidal silica and ball milling for more than 15 hours.

In step 604, the slurry from step 602 is applied to the substrate 104. The application can be achieved by painting, dipping, spraying (such as thermal spraying, though other methods are contemplated), or any other method appropriate for the viscosity of the slurry, as would be known to one of skill in the art.

In optional step 606, the slurry is partially cured. In some examples, the partial curing is achieved by drying at room temperature, though in other examples, the partial curing can be achieved by elevating the temperature or pressure. In one example, the slurry is partially cured at about 100-300°C for about 5-60 minutes.

In step 608, the surface of the slurry is adjusted. In one example, the adjustment includes changing the surface roughness of the slurry. In a particular example, the adjustment includes smoothing the surface of the slurry to reduce the surface roughness of the slurry. Ceramic-based substrates 104, and especially ceramic matrix composite (CMC) substrates 104, may have surface roughness dictated by the arrangement of fibers in the CMC material. That surface roughness affects the surface roughness of the barrier layer/intermediate layer 316. Shown in Figure 7A is a substrate 104 with surface roughness, and shown in Figure 7B is a layer of slurry 200 applied to the substrate 104 and having the same surface roughness. In general, the smoothing step 608 produces a smoother final article 100 (as shown in Figure 7E). In particular, the smoothing step 608 reduces the macro-level surface roughness of the slurry layer 200 and thus the outermost surface of the resulting barrier layer and/or intermediate layer. Macro-level surface roughness is surface roughness on the order of microns to millimeters. "Surface roughness" can be characterized by an arithmetic mean surface roughness, which can be measured by profilometers, structured light scanning, digital microscopes, or other methods known in the art. In some examples, the smoothing step 608 reduces the macro-level surface roughness by at least 50%. In a further example, the smoothing step 608 reduces surface roughness by at least 75%. Where the article is a gas turbine engine component such as an airfoil, the reduction in macro-level surface roughness can contribute to an overall increase in engine 20 efficiency. Furthermore, the change in macro-level surface roughness can augment the effectiveness of heat transfer from the underlying substrate 104. Therefore, macro-level surface roughness can be tailored to achieve a desired heat transfer profile from the substrate 104. Lastly, a reduction in macro-level surface roughness decreases rubbing or abrasion on components adjacent the article 100 and improves the mating of article 100 with adjacent components. For these reasons, smoothing the surface of the slurry can improve the lifetime and durability of the substrate 104.

The surface of the slurry can be adjusted in other ways additionally or alternatively to smoothing. For instance, the surface of the slurry can be formed to have a desired texture. One particular example is forming convex or concave features such as dimples in the surface of the slurry, though other features are also contemplated. These features can modify the aerodynamic and heat transfer properties of the article 100. The features can be the same across the entire surface of the surface of the slurry, or various areas of the slurry (and the resulting article 100) can have unique features.

In one example, the viscosity of the slurry is relatively low and the slurry is adjusted after the partial curing in step 606. In this example, the viscosity of the slurry is between about 10 and 500 cps. In another example, the viscosity of the slurry is relatively high, and the slurry is smoothed before the partial curing in step 606 or the partial curing step is omitted. In this example, the viscosity of the slurry is between about 200 and 800 cps.

In one example, the adjusting step 608 is only performed on the outermost of the barrier layer and the intermediate layer 316. That is, in examples that include the intermediate layer 316, the adjusting step 608 is only performed on the barrier layer but not the intermediate layer 316.

In one example, the adjusting step 608 is achieved by applying force to the slurry. For example, the force could be applied in a mold that has male and female tools that correspond to the desired geometry of the article 100. The mold could be a soft/pliable mold, such as a silicone mold, or a hard mold, such as a metallic or plastic mold. The mold could have a specific geometry that would create the corresponding features in examples where the adjustment includes augmenting the surface of the slurry to have a desired profile. In this example, the substrate 104 with the slurry is situated in a male or female tool (depending on the particular desired geometry of the article), and the other of the male and female tool 202 is pressed onto the slurry layer 200 to apply force to the slurry layer 200 and reduce the macro-level surface roughness of the slurry as shown in Figure 7C and discussed above.

For examples where the adjusting includes smoothing, the smoothing results in a smooth slurry layer 200 as shown in Figure 7D.

In another example, the adjusting step 608 and the application step 604 are performed simultaneously in an injection-molding type process. In this example, the substrate 104 is placed in a mold and the slurry is injected into the mold to apply the slurry to the substrate 104. Force is applied to the slurry by the mold by virtue of the process of injecting the slurry into the mold, as would be known in the art.

In one example, force applied to the slurry during the adjusting step 608 also reduces the thickness of the slurry on the substrate 104. In a particular example, the thickness of the slurry after the adjusting step is between about 7 and 11 mils (0.178-0.280 mm) such that the resulting barrier layer or combined barrier layer/intermediate layer 316 has a thickness between about 7 and 11 mils (0.178-0.280 mm) after the sintering step 610 (discussed below).

In one example, the slurry is heated during the adjusting step 608. The heating can cause or contribute to the partial curing of the slurry in step 606 and/or the sintering step 610 discussed below. For example, any of the molds discussed above could be heated.

In another example, the adjusting step 608 is achieved by tumbling the substrate 104/slurry in an abrasive media to smooth the surface of the slurry after partially curing the slurry in step 606.

It should be understood that example adjusting methods discussed above are exemplary only, and other adjusting methods known in the art could be used in step 608.

In step 610, the slurry is sintered to create the barrier layer/intermediate layer 316. The sintering step 610 can be performed after the adjusting step 608 or simultaneous with the adjusting step 608. In one example, the sintering includes heating at 1500°C or greater in an air environment for at least 1 hour. In some examples where a mold is used for the adjusting step 608, the sintering step 610 is performed while the substrate 104/slurry are still in the mold.

In optional step 612, micro-level surface roughness is created on the outermost surface of the barrier layer. Micro-level surface roughness is on the order of microns or smaller. Increasing the micro-level surface roughness of the barrier layer can improve bonding of the ceramic-based top coat 114 to the barrier layer in examples that include the ceramic-based top coat 114 as shown in Figure 7E. However, micro-level surface roughness does not substantially reduce the engine 20 efficiency, does not substantially inhibit heat transfer from the substrate 104, and does not substantially contribute to rubbing or abrasion on adjacent components. Micro-level surface roughness could be created on the outermost surface of the barrier layer by any known method, such as grit blasting or laser texturing, though other methods are known in the art.

In one example, steps 604-610 could be repeated one or more times to build up successive layers of barrier layer/intermediate layer 316 until a desired final thickness is achieved. For example, the final thickness of the barrier layer or combined barrier layer/intermediate layer 316 can be between about 7 and 11 mils (0.178-0.280 mm).

Although the different examples are illustrated as having specific components, the examples of this disclosure are not limited to those particular combinations. It is possible to use some of the components or features from any of the embodiments in combination with features or components from any of the other embodiments.

Certain embodiments of the present disclosure are as follows:
1. A method of fabricating a barrier layer on a substrate, comprising:
   mixing gettering particles, diffusive particles, and matrix material in a carrier fluid to form a slurry;
   applying a layer of the slurry to a substrate;
   adjusting the surface of the layer of the slurry; and
   sintering the layer of the slurry to form a barrier layer.
2. The method of embodiment 1, further comprising partially curing the layer of the slurry prior to the smoothing step.
3. The method of embodiment 1, wherein the adjusting is achieved by applying force to the layer of the slurry.
4. The method of embodiment 3, wherein the force is applied by a mold.
5. The method of embodiment 4, wherein the adjusting includes placing the substrate with the layer of the slurry into a first tool of a mold after the applying step and applying force to the layer of the slurry by pressing a second tool onto the layer of the slurry.
6. The method of embodiment 4, further comprising placing the substrate into a mold, and wherein the adjusting and applying are performed simultaneously by injecting the slurry into the mold.
7. The method of embodiment 4, wherein the layer of the slurry is heated during the adjusting.
8. The method of embodiment 4, further comprising partially curing the layer of the slurry prior to the adjusting step.
9. The method of embodiment 4, wherein the sintering is performed in the mold.
10. The method of embodiment 1, wherein the adjusting includes smoothing the surface of the layer of the slurry.
11. The method of embodiment 10, wherein the smoothing reduces the macro-level surface roughness of the layer of the slurry by at least 50%.
12. The method of embodiment 1, wherein the adjusting includes forming a texture in the surface of the layer of the slurry.
13. The method of embodiment 1, further comprising partially curing the layer of the slurry prior to the adjusting step, and wherein the adjusting includes smoothing by tumbling the substrate and layer of partially cured slurry in an abrasive media.
14. The method of embodiment 1, wherein the gettering particles are silicon oxycarbide particles, the diffusive particles are barium-magnesium alumino-silicate particles, and the matrix material is colloidal silica.
15. The method of embodiment 1, further comprising creating micro-level surface roughness on the barrier layer after the sintering.
16. The method of embodiment 1, further comprising applying a ceramic-based topcoat to the barrier layer after creating micro-level surface roughness on the barrier layer.
17. An article, comprising:
   a ceramic matrix composite substrate;
   a barrier layer on the ceramic matrix composite substrate, the barrier layer including diffusive particles and gettering particles in a matrix, the barrier layer having a surface texture; and
   a ceramic-based topcoat including an oxide-based material on the barrier layer.
18. The article of embodiment 17, wherein the gettering particles are silicon oxycarbide particles, the diffusive particles are barium-magnesium alumino-silicate particles, and the matrix material is silicon dioxide.
19. The article of embodiment 18, wherein the barrier layer includes by volume, about 1-30% of the barium-magnesium alumino-silicate particles, about 5-40% of the silicon dioxide and a balance of the silicon oxycarbide particles.
20. The article of embodiment 17, wherein the substrate is an airfoil for a gas turbine engine.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A method of fabricating a barrier layer on a substrate, comprising:
mixing gettering particles, diffusive particles, and matrix material in a carrier fluid to form a slurry;
applying a layer of the slurry to a substrate;
adjusting the surface of the layer of the slurry; and
sintering the layer of the slurry to form a barrier layer.

2. The method of claim 1, further comprising partially curing the layer of the slurry prior to the adjusting, e.g. the smoothing, step.

3. The method of claim 1 or claim 2, wherein the adjusting is achieved by applying force to the layer of the slurry, optionally wherein the force is applied by a mold.

4. The method of any one of the preceding claims, wherein the adjusting includes placing the substrate with the layer of the slurry into a first tool of a mold after the applying step and applying force to the layer of the slurry by pressing a second tool onto the layer of the slurry.

5. The method of any one of the preceding claims, further comprising placing the substrate into a mold, and wherein the adjusting and applying are performed simultaneously by injecting the slurry into the mold.

6. The method of any one of the preceding claims, wherein the layer of the slurry is heated during the adjusting, and/or further comprising partially curing the layer of the slurry prior to the adjusting step.

7. The method of any one of claims 3 to 6, wherein the sintering is performed in the mold.

8. The method of any one of the preceding claims, wherein the adjusting includes smoothing the surface of the layer of the slurry, optionally wherein the smoothing reduces the macro-level surface roughness of the layer of the slurry by at least 50%.

9. The method of any one of the preceding claims, wherein the adjusting includes forming a texture in the surface of the layer of the slurry.

10. The method of any one of the preceding claims, further comprising partially curing the layer of the slurry prior to the adjusting step, and wherein the adjusting includes smoothing by tumbling the substrate and layer of partially cured slurry in an abrasive media.

11. The method of any one of the preceding claims, wherein the gettering particles are silicon oxycarbide particles, the diffusive particles are barium-magnesium alumino-silicate particles, and the matrix material is colloidal silica.

12. The method of any one of the preceding claims, further comprising creating micro-level surface roughness on the barrier layer after the sintering, and/or further comprising applying a ceramic-based topcoat to the barrier layer after creating micro-level surface roughness on the barrier layer.

13. An article, comprising:
a ceramic matrix composite substrate;
a barrier layer on the ceramic matrix composite substrate, the barrier layer including diffusive particles and gettering particles in a matrix, the barrier layer having a surface texture; and
a ceramic-based topcoat including an oxide-based material on the barrier layer.

14. The article of claim 13, wherein the gettering particles are silicon oxycarbide particles, the diffusive particles are barium-magnesium alumino-silicate particles, and the matrix material is silicon dioxide, optionally wherein the barrier layer includes by volume, about 1-30% of the barium-magnesium alumino-silicate particles, about 5-40% of the silicon dioxide and a balance of the silicon oxycarbide particles.

15. The article of claim 13 or claim 14, wherein the substrate is an airfoil for a gas turbine engine.
